# EUROPÄISCHE PATENTANMELDUNG

(11) **EP 2 447 573 A1**
(43) Veröffentlichungstag der Anmeldung: **02.05.2012**
(21) Anmeldenummer: 11179242.0
(22) Anmeldetag: 30.08.2011
(51) Int. Cl.: F16H 55/48, F16H 55/50

(54) **Seilrolle**

(30) Priorität: 29.10.2010 DE 102010060260
(71) Anmelder: Ensinger GmbH, 71154 Nufringen (DE)
(72) Erfinder: Pahl, Gerhard, 4062 Kirchberg-Thening (AT); Stelzer, Heinz, 93413 Cham (DE); Zenker, Edmund, 4073 Wilhering (AT)
(74) Vertreter: Hoeger, Stellrecht & Partner Patentanwälte

(57) **Zusammenfassung**

Um eine Seilrolle (10), insbesondere für einen Mobil- oder Gittermastkran, mit einer möglichst geringen Masse zur Verfügung zu stellen, wobei die Seilrolle mit einer Seilrollenscheibe (12) aus einem Kunststoffmaterial, in der im Nabenbereich mittig eine Durchgangsöffnung ausgebildet ist, und einer in der Durchgangsöffnung angeordneten Buchse (14) aus Metall, welche ein Drehlager (16) aufnimmt, ausgebildet ist, wird vorgeschlagen, dass die Buchse (14) zwei in Axialrichtung aufeinander folgend angeordnete, hohlzylindrische Buchsenteile (32,34) umfasst, die miteinander verbunden sind, wobei die Seilrollenscheibe (12) im Form- und/oder Kraftschluss in axialer Richtung bezüglich der Buchse (14) fixiert ist.

## Beschreibung

Die Erfindung betrifft eine Seilrolle, insbesondere für einen Mobil- oder Gittermastkran, wie er häufig auf dem Festland oder auch im sogenannten off-shore Bereich zur Anwendung kommt.

Herkömmliche Seilrollen werden aus einer Seilrolle aus Kunststoffmaterial und einem Metalldrehlager gefertigt. Die Verwendung von Kunststoffmaterial bei der Herstellung der Seilrollenscheibe ist von erheblicher Bedeutung, da damit bei den für die Seilrollen typischen Durchmessern von ca. 200 bis 1500 mm Gewichtseinsparungen in großem Umfang realisiert werden können.

Die Seilrollenscheiben werden üblicherweise im Rotationsverfahren aus einem sogenannten Gusspolyamid (flüssiges Caprolactam-Aktivator-Katalysatorgemisch) hergestellt, welches in eine rotierende Form eingebracht wird und anschließend in diesen Formen durch anionische Polymerisation zu Seilrollenscheibenrohteilen ausreagieren gelassen wird.

Die so hergestellten Rohteile werden nach Ablaufen der chemischen Reaktion partiell im Nabenbereich zur Aufnahme des Drehlagers und eventuell auch im Bereich von deren Umfang auf die erforderliche Endgeometrie zerspanend nachbearbeitet, insbesondere auch um die geforderten Toleranzen einzuhalten.

Im Nabenbereich wird typischerweise ein metallisches Drehlager eingepresst, wobei hier große Sorgfalt darauf zu verwenden ist, dass die sich ergebende Flächenpressung zwischen der Seilrollenscheibe aus Kunststoff und dem metallischen Lager bestimmte vorgegebene Werte weder unter noch überschreitet.

Um diese Bedingungen einzuhalten muss die Seilrollenscheibe daher im Nabenbereich mit einem Untermaß gegenüber dem metallischen Lager gefertigt werden, welches sich jeweils auf der Basis des Durchmessers und der Breite des verwendeten Lagers berechnen lässt.

Dabei ist zu überprüfen, ob die jeweilige Seilrollenscheibe und das Kunststoffmaterial aus der sie gefertigt ist, im oben genannten Beispiel Gusspolyamid, für den jeweiligen Einsatz und die zugrunde liegende Geometrie, wie z.B. Nabendurchmesser, Nabenbreite und Seilrollendurchmesser, im Wechselspiel mit dem verwendeten Lager und den vorgegebenen Belastungsarten und Belastungsfällen (wie z.B. Nennlast, Sonderlast, Schrägzugwinkel, Betriebstemperatur, Seilgeschwindigkeit, Luftfeuchtigkeit) allen diesen Anforderungen entsprechen kann.

Insbesondere die durch die Nenn- oder Sonderlast in einem bestimmten Schrägzugwinkel auftretenden Vergleichsspannungen im Übergangsbereich vom Lager auf den Kunststoffbereich sind besonders zu beachten.

Darüber hinaus müssen diese zu berechnenden Vergleichsspannungen jeweils in Abhängigkeit von der für den Einsatz geforderten Temperatur beurteilt werden.

Dies gilt insbesondere auch deshalb, da der E-Modul von Kunststoffen eine signifikante Abhängigkeit von der Temperatur aufweist.

Die in einer Seilrollenscheibe auftretenden Spannungen setzen sich prinzipiell aus drei Belastungsarten zusammen: der Flächenpressung zwischen eingepresstem Lager und Seilrollenscheibe, der durch die Nenn- bzw. Sonderlast aufgebrachten Spannung sowie einem durch in der Praxis auftretenden Schrägzugwinkel resultierenden Biegemoment.

Ergeben sich für eine Seilrollenscheibe bei der Betrachtung der sogenannten Vergleichsspannungen und die dazu ermittelten Zug- und Druckkurven für das jeweilige Kunststoffmaterial unzulässig große Spannungswerte bei einer vorgegebenen Nennlast, einem definierten Schrägzugwinkel und einer geforderten Einsatztemperatur, dann ist oft die Verwendung einer zwischen Lager und Kunststoffseilrollenscheibe einzubringenden Metall-Buchse ein praktikabler und damit auch oft angewendeter Weg um die ursprünglich auftretenden Vergleichsspannungswerte durch Erhöhung des Nabendurchmessers und damit verbunden durch eine massive Erhöhung der tragfähigen Fläche sowie durch eine damit ebenfalls verbundene Reduzierung des Biegemoments der Seilrollenscheibe deutlich herabzusetzen und folglich wieder in zulässige Größenordnungen zu bringen.

Allerdings müssen solche Metall-Buchsen gegenüber dem Kunststoffteil der Seilrollenscheibe wie auch gegenüber dem Lager/Nabe durch außen- oder innen liegende Sicherungsringe gegen ein axiales Verschieben gesichert werden.

Dadurch verliert man ganz besonders im Fall außen liegender Sicherungsringe ein erhebliches Maß der zur Verfügung stehenden Breite der Kunststoffseilrollenscheibe. Die Auflagefläche zwischen Seilrollenscheibe und Metallbuchse wird durch die Montage der beiderseits anzubringenden Sicherungsringe eingeschränkt, wodurch, um Spannungswerte zu reduzieren der Buchsendurchmesser wiederum erhöht werden muss. Hand in hand mit einem derartigen Vorgehen erhöht sich natürlich auch das Gewicht einer solchen Metallbuchse mit zunehmendem Durchmesser beträchtlich, was bei jeglicher Anwendung in Mobiloder Gittermastkränen einen markanten Nachteil darstellt.

Aufgabe der vorliegenden Erfindung ist es eine Seilrolle vorzuschlagen, bei der die Buchse mit einer möglichst geringen Masse herstellbar ist.

Diese Aufgabe wird bei einer Seilrolle durch die Merkmale des Anspruchs 1 gelöst.

Aufgrund der Teilung der Buchse in zwei in Axialrichtung aufeinander folgend und damit koaxial angeordnete Buchsenteile und deren Verbindung miteinander lassen sich die bislang bei der Montage verwendeten Sicherungsringe zwischen Buchse und Seilrollenscheibe vermeiden, so dass eine zusätzliche Ausdehnung der Buchse in Axialrichtung, um auch die Sicherungsringe aufnehmen zu können, vermieden werden kann.

Zusätzlich ist eine größere verfügbare Gesamtbreite der Kunststoffseilrollenscheibe verfügbar.

Die beiden Buchsenteile halten im montierten Zustand die Seilrollenscheibe im Form- und/oder Kraftschluss in einer in Axialrichtung definierten Position. Für die Ausbildung des Form- und/oder Kraftschlusses stehen dem Fachmann vielfältige Möglichkeiten offen.

Die Sicherung gegen Axialverschiebung bei der erfindungsgemäßen Seilrolle kann über die Geometrie der Buchse selbst erzielt werden, da sie zweiteilig ist, wobei die Buchsenteile in Axialrichtung gegeneinander montierbar sind.

Besonders bevorzugt sind die Buchsenteile der erfindungsgemäßen Seilrolle so ausgebildet, dass sie im montierten Zustand aneinander angrenzend angeordnet sind.

Besonders bevorzugt sind die Buchsenteile lösbar miteinander verbindbar, was zum einen eine einfache Fertigung und Montage mit sich bringt und zum zweiten auch einen Austausch der Buchse im Rahmen einer Reparatur erlaubt.

Aufgrund der erfindungsgemäßen zweiteiligen Buchsenausführungsform und die damit verbundene Verbreiterung der nutzbaren Fläche zwischen Kunststoffseilrollenscheibe und Metallbuchse werden im Vergleich zu herkömmlichen Buchsen für Seilrollenscheibe auftretende Vergleichsspannungswerte signifikant reduziert, wodurch wiederum erforderliche Außendurchmesser der zweiteiligen Buchsenausführung so verringert werden können, dass sich damit bedeutende Gewichtseinsparungen erzielen lassen.

Bei einer weiter bevorzugten Ausführungsform der Erfindung ist vorgesehen, dass die lösbare Verbindung zwischen den beiden Buchsenteilen eine Schraubverbindung ist.

Hierbei können Schraubverbindungen von beiden Buchsenteilen in das jeweils andere Buchsenteil hinein vorgesehen sein.

Weiter bevorzugt ist bei der erfindungsgemäßen Seilrolle vorgesehen, dass die Schraubverbindungen in einem rückspringenden Umfangsbereich der Buchsenteile angeordnet sind, so dass eventuell vorstehende in Axialrichtung der Buchsenteile nicht über deren äußere Kontur hinaus stehen.

Weiter bevorzugt werden die Schraubbolzen in Umfangsrichtung gesehen abwechselnd in der einen und der anderen Axialrichtung und damit wechselseitig in die beiden Buchsenteile eindringend verschraubt.

Der axial außen angeordnete Rücksprung der beiden Buchsenteile erstreckt sich vorzugsweise bis zum Innenumfang der Buchse. Dies hat zum einen den Vorteil, dass Platz geschaffen ist innerhalb der Konturen der Seilrolle, in dem beispielsweise Befestigungselemente für in der Buchse zu montierende Drehlager aufgenommen werden können, während zum anderen eine weitere Gewichtsersparnis resultiert.

Bei besonders bevorzugten erfindungsgemäßen Seilrollen ist vorgesehen, dass die Buchsenteile an ihrem im montierten Zustand einander abgewandten Enden jeweils einen nach radial außen abstehenden Flansch aufweisen. Mit den Flanschen ist ein Mittel zur genauen Fixierung der Seilrollenscheibe auf der Buchse in Axialrichtung gegeben. Vorzugsweise weist die Seilrollenscheibe am Umfang ihrer Durchgangsöffnung, die die Buchsenteile aufnimmt, Rücksprünge auf, in denen die Flansche der Buchsenteile aufgenommen sind.

Weiter bevorzugt werden die Konturen der Rücksprünge der Seilrollenscheiben an die Konturen der radial abstehenden Flansche der Buchsenteile angepasst, so dass die Flansche die Außenkontur der Seilrolle nicht überragen, und noch weiter bevorzugt komplementär ausgestaltet, so dass durch den körperlichen Kontakt der Umfangsflächen der Rücksprünge und der Flansche nicht nur keine Anlagefläche zwischen Kunststoffteil und Metallbuchse verloren geht, sondern im Gegenteil sogar noch erhöht wird aufgrund des größeren Radius der Buchse im Bereich der Flansche.

Gemäß einer weiteren Ausführungsform der Erfindung weisen die Buchsenteile an ihren axial benachbarten Bereichen in Radialrichtung wirkende zentrierende Führungsflächen auf. Dies erleichtert die Montage der beiden Buchsenteile an der Seilrollenscheibe generell und sichert eine genaue koaxiale Ausrichtung der Buchsenteile zueinander wie auch gegenüber der Seilrollenscheibe.

Ferner weisen bei einer bevorzugten Ausführungsform der Erfindung die Buchsenteile an ihren in Axialrichtung benachbarten Umfangsflächen oder Außenkanten einen Rücksprung auf, insbesondere in Form einer Phase. Die Rücksprünge bzw. Phasen ergänzen sich im montierten Zustand der Buchsenteile zu einem ringförmigen Kanal an der Außenoberfläche der Buchse.

In vielen Fällen weist die Seilrollenscheibe an ihrem Außenumfang eine umlaufende Nut auf, in der ein Seil des Krans geführt werden kann.

Weiter bevorzugt ist in der Seilrollenscheibe eine radiale Bohrung vorgesehen, die von der Nut am Außenumfang der Seilrollenscheibe bis zu ihrer Innenoberfläche der Durchgangsöffnung reicht und insbesondere in den ringförmigen Kanal der Buchse mündet. Aufgrund dieser Konfiguration lässt sich auch im montierten Zustand Schmiermittel durch die Seilrollenscheibe zum Drehlager führen. Eine genaue Positionierung der radialen Bohrung der Seilrollenscheibe bezüglich eines in der Buchse verlaufenden Kanals zum Drehlager ist aufgrund des ringförmigen Kanals an der Außenoberfläche der Buchse nicht erforderlich.

Eine weitere Material- und damit Gewichtsersparnis lässt sich bei der erfindungsgemäßen Seilrolle erzielen, wenn die Seilrollenscheibe an ihrem Außen-und Innenumfang einen ersten und einen zweiten Ringbereich aufweist, wobei die ersten und zweiten Ringbereiche in Axialrichtung im Wesentlichen dieselbe erste Dicke aufweisen, und einen den ersten Ringbereich mit dem zweiten Ringbereich verbindenden Ringscheibenteil der eine zweite Dicke in Axialrichtung aufweist, die geringer ist als die erste Dicke.

Hierbei lassen sich die mechanischen Kennwerte der Seilrolle nahezu unverändert erhalten, wenn bevorzugt der Ringbereich auf beiden Außenflächen mehrere sich radial von ersten zum zweiten Ringbereich erstreckende Rippen aufweist.

Bevorzugt wird die Seilrollenscheibe im Bereich ihrer Rippen so geformt, dass die Dicke der Seilrollenscheibe in Axialrichtung im Bereich der Rippen im Wesentlichen der ersten Dicke entspricht.

Diese und weitere Vorteile der Erfindung werden im Folgenden anhand der Zeichnungen noch erläutert.

Es zeigen im Einzelnen
- Figur 1:: eine perspektivische Darstellung einer erfindungsgemäßen Seilrolle;
- Figur 2:: eine Schnittansicht der Seilrolle aus Figur 1;
- Figur 3:: eine Seitenansicht der Buchse der Seilrolle der Figur 1 mit zwei lösbar mittels einer Schraubverbindung verbundenen Buchsenteilen; und
- Figur 4:: eine perspektivische Darstellung eines Buchsenteils der Buchse der Figur 3.

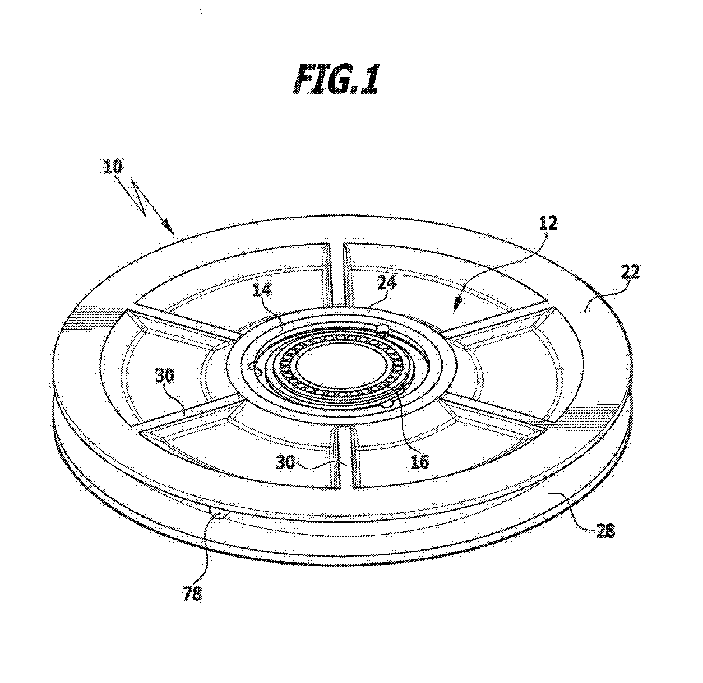

Figur 1 zeigt eine mit dem Bezugszeichen 10 bezeichnete erfindungsgemäße Seilrolle mit einer Seilrollenscheibe 12 und einer Buchse 14. Die Seilrolle 10 ist auf einem metallischen Drehlager 16 montiert, welches mittels Sicherungsringen 18, 19 axial in der Buchse 14 gesichert ist.

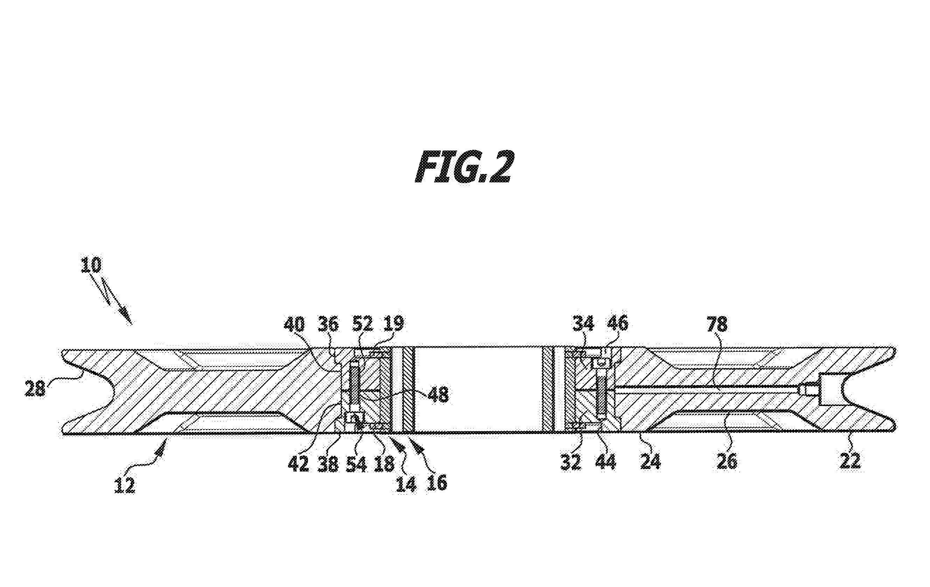

Nähere Einzelheiten der erfindungsgemäßen Seilrolle 10 sind der Schnittdarstellung der Figur 2 zu entnehmen.

Die Seilrollenscheibe 12 weist einen ersten, am Außenumfang angeordneten Ringbereich 22 und einen zweiten, am Innenumfang angeordneten Ringbereich 24 auf. Die beiden Ringbereiche 22, 24 sind über ein Ringscheibenteil 26 miteinander verbunden.

Der erste Ringbereich 22 weist an seinem Außenumfang, der gleichzeitig den Außenumfang der erfindungsgemäßen Seilrolle bildet, eine ringsum laufende Nut 28 auf. Der zweite, den Innenumfang definierende Ringbereich 24 liegt im Wesentlichen vollflächig an der Buchse 14 an. Die beiden Ringbereiche 22 und 24 weisen eine in Axialrichtung gesehen im Wesentlichen gleiche erste Dicke auf.

Das Ringscheibenteil 26 kann mit einer erheblich geringeren zweiten Dicke gefertigt werden, die in dem gezeigten Ausführungsbeispiel nur etwa die Hälfte der ersten Dicke beträgt. Um trotzdem eine vergleichbare mechanische Festigkeit der Seilrollenscheibe 12 zu gewährleisten sind auf beiden axial außen liegenden Oberflächen des Ringscheibenteils 26 mehrere, im vorliegenden Ausführungsbeispiel sechs, radial verlaufende Rippen 30 angeordnet, die sich vom ersten Ringbereich 22 bis zum zweiten Ringbereich 24 erstrecken. Der erste und der zweite Ringbereich 22, 24 sind bevorzugt über konisch ausgebildete Übergangszonen mit dem Ringscheibenteil 26 verbunden.

Die Buchse 14 ist erfindungsgemäß zweiteilig ausgebildet und umfasst ein erstes und ein zweites hohlzylindrisches Buchsenteil 32, 34, die in Axialrichtung koaxial ausgerichtet die Durchgangsöffnung der Seilrollenscheibe 12 fassen. Die beiden Buchsenteile 32, 34 sind im Wesentlichen gleich, insbesondere identisch ausgebildet, so dass ein geringer Fertigungsaufwand resultiert.

An ihrer axial außen liegenden Oberfläche weisen die Buchsenteile 32, 34 einen radial nach außen abstehenden Flansch 36, 38 auf, wobei im montierten Zustand der Buchsenteile 32, 34 am Außenumfang der Buchse eine rings umlaufender rückspringender Versatz 40 resultiert.

In diesem Versatz 40 wird ein von der Seilrollenscheibe 12 bzw. von deren zweiten Ringbereich 24 radial nach innen vorspringender Bereich 42 zentrierend aufgenommen. Die Seilrollenscheibe 12 wird damit im Formschluss zwischen den Buchsenteilen 32, 34 gehalten.

Die bei der Seilrollenscheibe 12 an ihrem Innenumfang beidseits des vorspringenden Bereichs 42 verbleibenden ringförmigen Rücksprünge sind vorzugsweise so dimensioniert, dass ein bündiger Übergang des Ringflansches 36 bzw. 38 mit der axial außenliegenden Oberfläche des zweiten Ringbereichs der Seilrollenscheibe 12 erzielt wird und insbesondere die Außenumfangsflächen der Flansche 36, 38 in Kontakt mit der Innenoberfläche der Seilrollenscheibe 12 stehen.

Besonders wichtig ist ein flächiges Anliegen der Seilrollenscheibe mit ihrem vorspringenden Bereich 42 an der Oberfläche des Versatzes 40. Dies wird vorzugsweise dadurch erreicht, dass die Durchgangsöffnung der Seilrollenscheibe mit Untermaß gefertigt und die Buchsenteile in die Durchgangsöffnung eingepresst werden. Damit ist zusätzlich ein Kraftschluss zwischen Seilrollenscheibe und Buchse erreicht.

Weiter trägt zur mechanischen Stabilität der Seilrolle bei, wenn die Flansche 36, 38 passgenau in die Rücksprünge der Seilrollenscheibe einrücken und hier ebenfalls eine flächige Anlage erzielt wird. Bei dieser Gestaltung kann dann die auf Grund des größeren Radius vergrößerte Umfangsfläche der Flansche zur Geltung gebracht werden. So wird nicht nur die Seilrollenscheibe in axialer Richtung auf der Buchse fixiert, sondern die in axialer Richtung zur Verfügung stehende Auflagefläche zwischen Seilrollenscheibe und Buchse maximal genutzt. Dabei lässt sich eine Reduzierung der Vergleichsspannungen erzielt, die weiter minimiert werden durch die Vergrößerung der Auflagefläche im Bereich der Umfangsflächen der Flansche. Daraus ergibt sich die Möglichkeit einer weiter Verringerung des Außendurchmessers der Buchse, verbunden mit einem zusätzlichen Gewichtseinsparungspotential.

Die beiden Buchsenteile 32, 34 weisen an ihrem Innenumfang radial außen liegend einen rückspringenden Bereich 44, 46 auf, im dem in regelmäßigen Winkelabständen Bohrungen 48 (im vorliegenden Ausführungsbeispiel jeweils drei) vorgesehen sind. Auf ihrer axial innenliegenden Oberfläche 50 sind in Umfangsrichtung mittig zwischen zwei Bohrungen 48 Gewindebohrungen 52 eingebracht. Im montierten Zustand der Buchsenteile 32, 34 liegen sich dann fluchtend Bohrungen 48 und Gewindebohrungen 52 gegenüber, so dass sechs Gewindebolzen 54 einschraubbar sind.

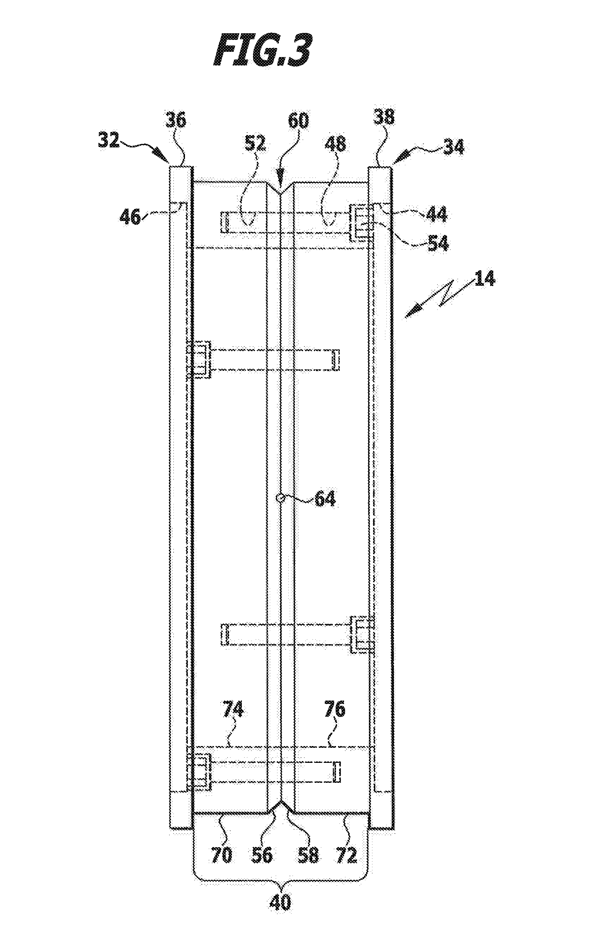

Dies ist in Figur 3, die eine Seitenansicht der Buchse der erfindungsgemäßen Seilrolle zeigt, nochmals veranschaulicht.

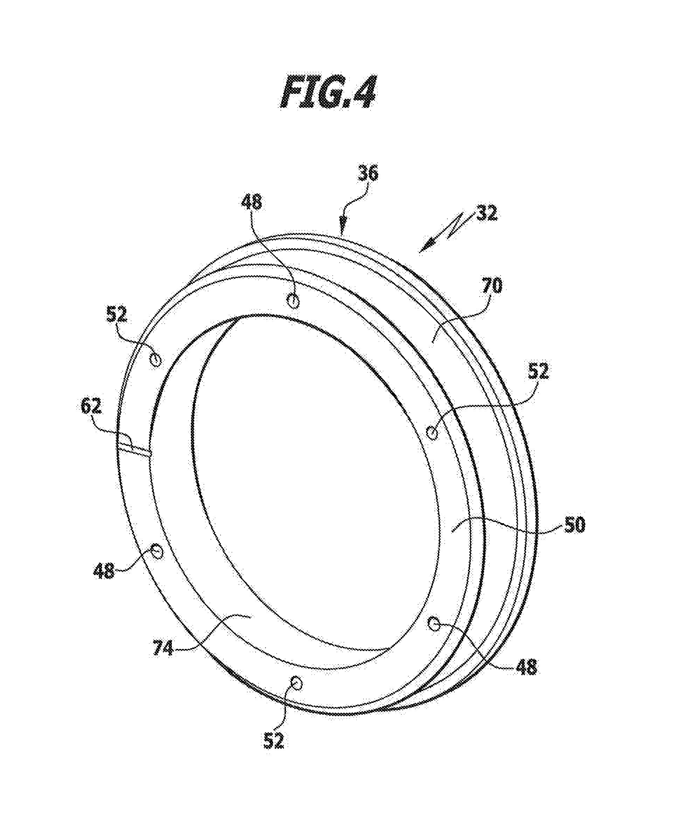

Bevorzugt weisen die Buchsenteile in einander zugewandten Randbereichen ihrer Außenoberflächen 70, 72 einen vorzugsweise als Phase ausgebildeten Rücksprung 56, 58 auf, die sich zu einem ringförmigen Kanal 60 ergänzen. Die Buchsenteile 32, 34 weisen ferner jeweils eine radial verlaufende Nut 62 auf (vgl. Figur 4), die auf ihren im zusammengebauten Zustand aneinander angrenzenden Oberflächen 50 ausgebildet ist. Die beiden Buchsenteile werden so aneinander montiert, dass die beiden Nuten 62 einander zugewandt positioniert sind und zusammen einen radial von der Oberfläche des Versatzes 40 (Außenumfangsflächen 70, 72) der Buchse zur Durchgangsöffnung (Innenumfangsflächen 74, 76) führenden Kanal 64 bilden. Dieser Kanal 64 endet an den Außenumfangsflächen in dem ringförmigen Kanal 60, der von den beiden Phasen 56, 58 gebildet wird.

Der Kanal 64 bildet zusammen mit dem ringförmigen Kanal 60 am Außenumfang der Buchse eine Möglichkeit dem in der Buchse 14 gehaltenen Drehlager 16 Schmierstoff zuzuführen. Zu diesem Zweck weist auch die Seilrollenscheibe 12 eine radiale Bohrung 78 auf, die von der Nut 28 am Außenumfang der Seilrollenscheibe bis zum ringförmigen Kanal 60 führt. Da sich der Schmierstoff in Umfangrichtung verteilen kann braucht die Seilrollenscheibe 12 mit ihrer Bohrung 78 nicht auf die Position des Kanals 64 ausgerichtet auf der Buchse 14 montiert werden, was diesen Vorgang stark vereinfacht.

An einem konkreten Ausführungsbeispiel seien die konstruktiven Maßnahmen zur Verminderung der Vergleichsspannungen, die aufgrund der erfindungsgemäßen Ausführung der Seilrolle möglich werden, im Einzelnen dargestellt.

Der Durchmesser der Seilrolle beträgt in jedem (Vergleichs)Beispiel 800 mm.

Als Vergleichsbeispiel dient eine direkt auf einem metallischen Drehlager montierte Seilrollenscheibe aus Gußpolyamid, bei der Vergleichsspannungen in Höhe von Sigma(V) = 121 N/mm² auftreten, die bei Einsatztemperaturen von maximal ca. 60°C nicht akzeptabel sind.

Bei der Verwendung einer herkömmlichen, über Sicherungsringe fixierten Stahlbuchse würde man zur Erzielung von vertretbaren Sigma(V)-Werten einen Buchsenaußendurchmesser von 320 mm bei einer Buchsenbreite von 80 mm benötigen.

Bei einer derartigen Ausführung würde als aktive Auflagefläche in Folge der erforderlichen Sicherungsringe eine nutzbare Buchsenbreite von 63 mm als "tragend" verbleiben.

Wird diese Buchse durch eine erfindungsgemäße zweiteilige Buchse ersetzt, kann die gesamte Seilrollenbreite (Nabenbreite) des Kunststoffteils als tragende Fläche genutzt werden. Durch diese größere Auflagefläche kann der Buchsenaußendurchmesser erheblich verringert werden, wobei trotzdem zulässige Vergleichsspannungswerte erzielt werden (vgl. die Daten in nachstehender Tabelle 1). Hierdurch wird eine erhebliche Gewichtsersparnis realisiert. Ersetzt man bei der erfindungsgemäßen Seilrolle 10 die genannte zweiteilige Stahlbuchse durch eine zweiteilige Buchse aus Aluminium, verringert sich das Gewicht erneut erheblich.

**Tabelle 1**

| Buchsenvariante | Stand der Technik Stahl | zweiteilige Buchse Stahl | zweiteilige Buchse Aluminium |
|---|---|---|---|
| Außendurchmesser | 320 mm | 240 mm | 240 mm |
| Innendurchmesser | 180 mm | 180 mm | 180 mm |
| Breite (axial) | 80 mm | 80 mm | 80 mm |
| nutzbare Breite | 63 mm | 80 mm | 80 mm |
| Gewicht | 34 kg | 12 kg | 4 kg |

Im Folgenden sei kurz die Herstellung einer Seilrolle 10 gemäß vorliegender Erfindung skizziert:

Die Seilrollenscheibe 12 wird typischerweise im Gießverfahren hergestellt, wobei im vorliegenden Beispiel ε-Caprolactam in Verbindung mit einem dem Fachmann geläufigen Katalysator-Aktivator-System durch anionische Polymerisation zum Polymer reagieren gelassen wird. Es versteht sich, dass für die erfindungsgemäße Seilrollenscheibe auch andere Polymermaterialien verwendet werden können.

Da das Caprolactam-Monomere einen Schmelzpunkt von ca. 69 °C aufweist, kann dieses in Form von Schuppen oder in flüssiger Form in geeigneten Vorratsgefäßen bereitgehalten werden. Eine erste Teilmenge wird mit dem Katalysator vermischt, eine zweite Teilmenge wird mit dem Aktivator zusammengegeben. Die beiden Teilmengen werden in einem Mischkopf gemischt und danach direkt in das Gießwerkzeug gegeben. Dort findet dann die Polymerisationsreaktion aufgrund der Vorheizung des Werkzeugs auf die Reaktionstemperatur statt.

Um den Zutritt von Feuchtigkeit und Sauerstoff zu vermeiden wird vorzugsweise unter Stickstoffatmosphäre gearbeitet.

Da die Seilrollenscheiben 12 rotationssymmetrische Bauteile sind werden diese vorzugsweise in einer rotierenden Form hergestellt, deren Rotationsgeschwindigkeit so eingestellt wird, dass beim Befüllen der Form die Luft aus der Kavität des Werkzeugs vollständig verdrängt wird. Nach Beendigung der Polymerisationsreaktion kann die Form geöffnet und das Bauteil in der Regel ohne vorherige Kühlung entnommen werden. Zum Abbau innerer Materialspannungen werden die Bauteile einem Temperprozess mit anschließender kontrollierter langsamer Abkühlung unterzogen. Polyamidteile werden vorzugsweise einer Wasserlagerung unterzogen, um so deren zäh-elastische Eigenschaften, die sich erst bei Wassersättigung vollständig ergeben, zur Entfaltung zu bringen.

Die dabei erhaltenen Seilrollenscheiben-Rohteile werden anschließend spanend verarbeitet um sie mit den erforderlichen Toleranzen, insbesondere im Bereich der Naben- oder Durchgangsöffnung bzw. der Innenoberfläche, die die Buchsenteile 32, 34 aufnimmt, zu erhalten. Hier wird mit Untermaß gefertigt, so dass sich beim Einpressen der Buchsenteile 32, 34 eine Flächenpressung von ca. 2 bis ca. 20 N/mm² ergibt. Nachdem die beiden Buchsenteile 32, 34 mit ihren Bohrungen 48, 52 aufeinander ausgerichtet eingepresst sind werden diese noch mit den Schraubbolzen 54 gegeneinander gesichert.

Als Drehlager 16, die in der Buchse 14 eingesetzt werden, kommen vorzugsweise Zylinderrollenlager zu Einsatz. Diese können axial gegenüber der Buchse 14 unproblematisch in einem rückspringenden Bereich mittels Sicherungsringen 18, 19 fixiert werden.

## Patentansprüche

1. Seilrolle, insbesondere für einen Mobil- oder Gittermastkran, mit einer Seilrollenscheibe aus einem Kunststoffmaterial, in der im Nabenbereich mittig eine Durchgangsöffnung ausgebildet ist, und einer in der Durchgangsöffnung angeordneten Buchse aus Metall, welche ein Drehlager aufnimmt,
**dadurch gekennzeichnet, dass** die Buchse zwei in Axialrichtung aufeinander folgend angeordnete, hohlzylindrische Buchsenteile umfasst, die miteinander verbunden sind, wobei die Seilrollenscheibe im Form-und/oder Kraftschluss in axialer Richtung bezüglich der Buchse fixiert ist.

2. Seilrolle nach Anspruch 1, **dadurch gekennzeichnet, dass** die zwei Buchsenteile im Wesentlichen aneinander angrenzend angeordnet sind.

3. Seilrolle nach Anspruch 1 oder 2, **dadurch gekennzeichnet, dass** die Buchsenteile lösbar miteinander verbunden sind.

4. Seilrolle nach Anspruch 3, **dadurch gekennzeichnet, dass** die lösbare Verbindung eine Schraubverbindung ist.

5. Seilrolle nach Anspruch 3, **dadurch gekennzeichnet, dass** die Schraubverbindung zwei oder mehr Schraubbolzen umfasst, welche vorzugsweise in Umfangsrichtung der Buchse verteilt parallel zur Axialrichtung der Seilrolle ausgerichtet montiert sind, wobei weiter bevorzugt die Schraubbolzen abwechselnd in der einen und der anderen Axialrichtung wechselseitig in die Buchsenteile eindringend verschraubt sind.

6. Seilrolle nach Anspruch 4 oder 5, **dadurch gekennzeichnet, dass** mindestens eines der Buchsenteile an einer axial außen liegenden Oberfläche einen ringförmigen Rücksprung aufweist, in welchem vorzugsweise Bohrungen für die Schraubverbindung angeordnet sind.

7. Seilrolle nach Anspruch 6, **dadurch gekennzeichnet, dass** beide Buchsenteile an ihrer jeweils axial außen liegenden Oberfläche einen ringförmigen Rücksprung aufweisen, der sich vorzugsweise bis zum Innenumfang der Buchsenteile erstreckt.

8. Seilrolle nach einem der Ansprüche 1 bis 7, **dadurch gekennzeichnet, dass** die Buchsenteile an ihren im montierten Zustand in Axialrichtung einander abgewandten Enden jeweils einen nach radial außen abstehenden Flansch aufweisen.

9. Seilrolle nach Anspruch 8, **dadurch gekennzeichnet, dass** die Seilrollenscheibe am Umfang ihrer Durchgangsöffnung in Axialrichtung außen angeordnete Rücksprünge aufweist, in die die Flansche der Buchsenteile eingerückt sind, wobei vorzugsweise Umfangsflächen der Flansche an Umfangsflächen der Rücksprünge anliegen.

10. Seilrolle nach einem der Ansprüche 1 bis 9, **dadurch gekennzeichnet, dass** die Buchsenteile an ihren axial benachbarten Bereichen in Radialrichtung wirkende zentrierende Führungsflächen aufweisen.

11. Seilrolle nach einem der Ansprüche 1 bis 10, **dadurch gekennzeichnet, dass** die Buchsenteile an ihren axial benachbarten Bereichen am Außenumfang einen Rücksprung, insbesondere in Form einer Phase aufweisen.

12. Seilrolle nach einem der Ansprüche 1 bis 11, **dadurch gekennzeichnet, dass** die Seilrollenscheibe eine an ihrem Außenumfang rückspringende rings umlaufende Nut sowie eine von der Nut radial nach innen verlaufende durchgehende Bohrung, welche vorzugsweise im Bereich der Rücksprünge am Außenumfang der Buchsenteile endet.

13. Seilrolle nach einem der Ansprüche 1 bis 12, **dadurch gekennzeichnet, dass** die Seilrollenscheibe an ihrem Außen- und Innenumfang einen ersten und einen zweiten Ringbereich aufweist, wobei die ersten und zweiten Ringbereiche in Axialrichtung im Wesentlichen dieselbe erste Dicke aufweisen, und einen den ersten Ringbereich mit dem zweiten Ringbereich verbindenden Ringscheibenteil der eine zweite Dicke in Axialrichtung aufweist, die geringer ist als die erste Dicke.

14. Seilrolle nach Anspruch 13, **dadurch gekennzeichnet, dass** der Ringbereich mehrere sich radial von ersten zum zweiten Ringbereich erstreckende Rippen aufweist.

15. Seilrolle nach Anspruch 14, **dadurch gekennzeichnet, dass** die Dicke der Seilrollenscheibe in Axialrichtung im Bereich der Rippen im Wesentlichen der ersten Dicke entspricht.
